# EUROPEAN PATENT SPECIFICATION

(11) **EP 3 018 079 B1**
(45) Date of publication and mention of the grant of the patent: **15.03.2017**
(21) Application number: 13888707.0
(22) Date of filing: 03.07.2013
(51) Int. Cl.: B65G 1/04

(54) **AUTOMATED SYSTEM FOR PREPARING ORDERS OF ELONGATE ELEMENTS**
AUTOMATISIERTES SYSTEM ZUR VORBEREITUNG VON BESTELLUNGEN LÄNGLICHER ELEMENTE
SYSTÈME AUTOMATISÉ DE PRÉPARATION DE COMMANDES D'ÉLÉMENTS ALLONGÉS

(43) Date of publication of application: 11.05.2016
(73) Proprietor: Sinase Alfonso S.A., 31500 Tudela (Navarra) (ES)
(72) Inventor: SERRANO GARCIA, Iker, E-31500 Tudela (Navarra) (ES)
(74) Representative: Monzón de la Flor, Luis Miguel
(86) International application number: PCT/ES2013/070458
(87) International publication number: WO 2015/001142

(56) References cited:
- EP-A1- 0 213 070
- EP-A1- 0 213 070
- EP-A2- 0 116 152
- EP-A2- 0 116 152
- EP-A2- 0 773 187
- DE-A1- 2 102 098
- DE-A1- 2 102 098
- JP-A- S 617 141
- JP-A- S58 172 101
- US-A- 5 354 169
- US-A- 5 938 710

## Description

### OBJECT OF THE INVENTION

The object of the present invention, as established in the title, is an automated order preparation system for elongated elements and a method using such a system.

The system is designed so that automatically, and if required also manually, several orders of elongated elements can be prepared leaving them disposed on a lift platform.

Therefore, the present invention falls within the sphere of automated order preparation systems.

### BACKGROUND OF THE INVENTION.

The state of the art is familiar with patent document ES 2246654 which describes a system for storing elongated elements, having a series of warehousing compartments or storage slots distributed at different heights, which are formed by means of a support structure on which at the different warehouse heights carriages are disposed on a track assembly over longitudinal guides solidly joined to the structure, which allows for the storage and extraction of the elongated elements on the compartments distributed in height.

This system is a totally manual system, presenting as a benefit the design of the storage slots in combination with sliding carriages which run on roller bearings. Document EP0213070A1 discloses a storage system having a load carrier which is movable along storage frames with bins in honeycomb arrangement and which is provided with at least one lift stage comprising a working platform and a platform for the stored articles whereby this last said platform is provided with an intermediate storing device and a handling device.

Furthermore, EP 0 213 070 A1 discloses an automated order preparation system for elongated elements as stated in the preamble of the appended claim 1.

The storage system described in the aforementioned patent, however, can be improved, particularly with regards to the use of remotely controlled means for manipulating and preparing orders, this being the objective of the present invention which is described as follows and which is set out in essence in claim one.

### DESCRIPTION OF THE INVENTION.

The object of the invention is an automated order preparation system for elongated elements, such as profiles of any type, beams, pipes and similar, it being especially useful given its efficacy, optimisation of space, as it allows the heights of the slots to be increased by one more metre, safety and reduction of manual operations given the weight of such elements.

The automated order preparation system according to the invention is as stated in the appended claim 1. The system comprises:
- A gantry moveable along guide tracks mounted on the floor.
- A lift platform secured on the moveable gantry and which can be lifted and lowered.
- A control panel mounted on the platform and which comprises:
   ∘ A travel push button panel from which the longitudinal movements of the gantry and lifting and lowering of the platform are conducted. Along with the reception of orders, management thereof, notice of preparation and traceability control.
   ∘ A portable push button panel for the use of the two hoists with which the material can be introduced in and removed from the slots.
- An unloading table or a fixed structure onto which the material is evacuated from the lift platform.

The gantry is provided with at least two hoists to be able to extract the material. The hoists can be moved right, left and proceed to lift or lower the material to be prepared, with the hoists being able to be handled independently or in a synchronised manner.

The lift platform comprises:
- A supporting surface for the elongated elements of the order. Said supporting surface comprises a series of fixed or moveable cradles between which a series of spaces are left between them, defining over the totality of the supporting surface a series of independent spaces or stacking boxes, meaning that it is possible to prepare several orders at the same time, without them having to be prepared sequentially one after the other.
- A transportation aisle which in one possible embodiment could be gangways.
- A control panel which is located on the platform, and has two distinct sections:
   ▪A travel push button panel made up of a series of push buttons to conduct the movements forward, back, up and down of the platform. Likewise the platform's safety stop. It also has a computer with a touchscreen to manage the orders received in the company, which informs of the order, customer, requested material, level of urgency and manages traceability thereof and notifies when it is definitively prepared.
   ▪ A push button panel of the gantry or gantry crane and in particular of the gantry hoists. This push button panel has the functions of up and down, left, right, forward, back and the option to synchronise both hoists or to handle one or the other independently.

The transportation aisle for workers on the lift platform, in one possible mode of embodiment, is formed by three gangways:
- A gangway on the rear part (from which the equipment is handled)
- Two side ones which is from where the material is prepared.

These three gangways are limited on one side by the boxes and on the other side by railings with their corresponding access doors, to prevent workers from being able to fall.

The evacuation of the material from the boxes is made onto a fixed structure, unloading table.

The moveable gantry is disposed in the space defined between storage slots disposed facing each other.

In order to be able to remove the material located in the lower slots, the machine has been provided with lateral doors with springs, one on each side. Said material is removed to the central working platform zone, so as to distribute it to its corresponding slot from this point.

The system is provided with safety means among which might be included:
- Anti-slip floor on gangways or pedestrian zone of the platform to avoid slipping.
- Instantaneous fall protection device installed on the platform, which in the event of breakage instantaneously blocks the platform t to prevent a sudden fall. System installed on each of the four cables which the platform holds.
- Safety mushroom: causes a total blockage of the machine when activated. They are located, the first on the control panel and the 4 remaining ones on each of the gantry pillars.
- Door opening safety means in such a way that the access doors to the machine will not open while the equipment is in motion or when raised, with an indicative poster on each door warning of the risk.
- Automatic door closing: All doors the platform has close automatically by means of a spring.
- Volumetric sensors which in one possible mode of embodiment would be 8 volumetric sensors, 4 on its front part and 4 on the rear part.
   All volumetric sensors are positioned in such a way that any person that might enter within its radius of action makes the equipment stop safely, inhibiting its movements.
   On approaching the ends of the working zone, the machine automatically changes its operating mode to slow for safety to prevent potential de-railings or impacts against the unloading table.
- Safety pedal: A pedal located on the central gangway, which is obligatory to be stepped on in order to carry out the longitudinal movements and lifting-lowering of the platform if the platform is working in 2-operatives mode.
- The machine has an acoustic and luminous signal which is activated when any movement is made (movement of the gantry, platform, hoist, etc..) In this way people who are near the machine can become aware of its presence.

The method for preparing the order according to the invention comprises the steps according to the appended claim 8. A method for preparing an order comprises the steps:
- The lift platform starts its movement from the order dispatch zone.
- From this point with the platform in the lower position, the platform's backward movement begins until positioning itself in the location indicated on the screen as being where the material to be prepared is. Said order is assigned by a programme a box into which the material is to be stacked..
- Then the machine is positioned in the corresponding location to extract the material to a specific slot or box.
- Once the machine is positioned in place, the material is extracted. This extraction is made according to the weight of the material either manually or with the help of the hoists.
- Once the order is in place, the order's quality number is entered.
- The orders to be made are ordered automatically to reduce the movements of the machine, combining several orders at the same time. The order of preparation beings always with hot-rolled products, finishing with the pipe, so that the heavier material does not scratch the lighter material. Irrespective, there is freedom of preparation to be able to change the order due to any need, it can be done manually from the screen itself.
- Order dispatch: Once all the orders have been prepared in the machine, the lift platform moves to the unloading table.

Thanks to the system described and the means it is provided with, an automated order preparation system for elongated elements is achieved which can manage to require control by just one operative from a control panel all of which is conducted with all possible safety means.

### EXPLANATION OF THE DRAWINGS

In order to complement the description that follows and with a view to contributing towards a better understanding of its characteristics, a set of plans is attached to the present description whose figures, by way of illustration and not limitation, represent the most significant details of the invention.
Figure 1, shows a representation in perspective of the automated order preparation system for elongated elements that is the object of the invention.
Figure 2, shows a detail of the lift platform.
Figure 3 shows another view of the system in which it is possible to appreciate some elongated elements disposed on the lift platform.
Figure 4 shows a detail of a guide rail on which the gantry travels and the safety brake associated with the gantry.

### PREFERRED EMBODIMENT OF THE INVENTION

In the light of the drawings what follows is a description of a preferred mode of embodiment of the proposed invention.

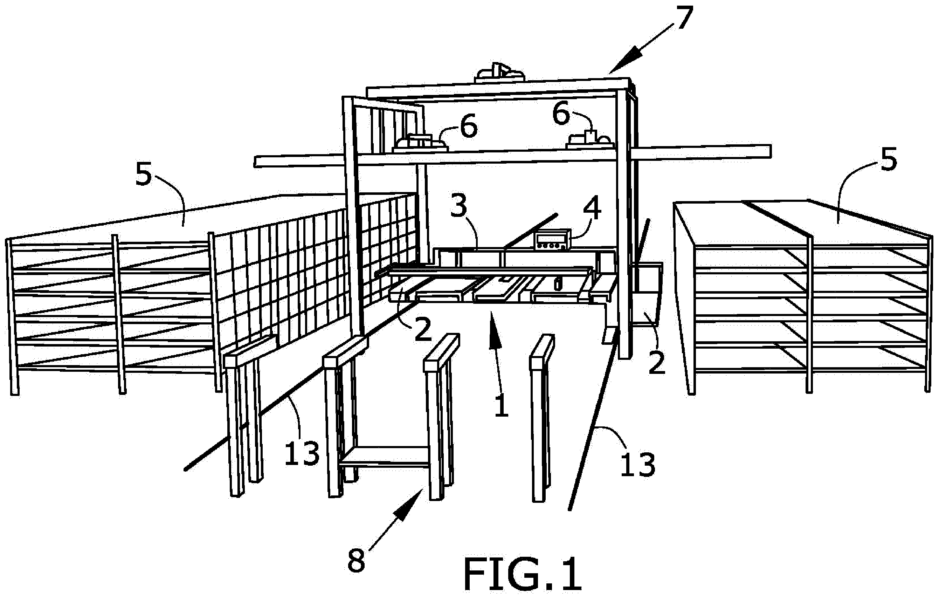

Figure 1 shows the elements that form part of the order preparation system for elongated elements and which as can be observed comprises:
- A moveable gantry (7) on guide tracks (13) mounted on the floor.
- A lift platform (1) secured on the moveable gantry (7) and which can be lifted and lowered.
- A control panel (4) from which the longitudinal movements of the gantry (7) and lifting and lowering of the platform (1) are made.
- An unloading table (8) or fixed structure onto which the material is evacuated from the lift platform.

The gantry (7) is provided with at least two hoists (6) used to be able to extract the material and which can be moved to the right, left and to proceed to lift or lower the material to be prepared.

The lift platform (1) has a transportation aisle, and which in the embodiment shown comprises two lateral gangways (2) with their respective entrances and exits at the front and rear, as well as a transversal gangway (3) which connects both lateral gangways (2).

The system travels in the space comprised between two storage slots (5) disposed opposite each other.

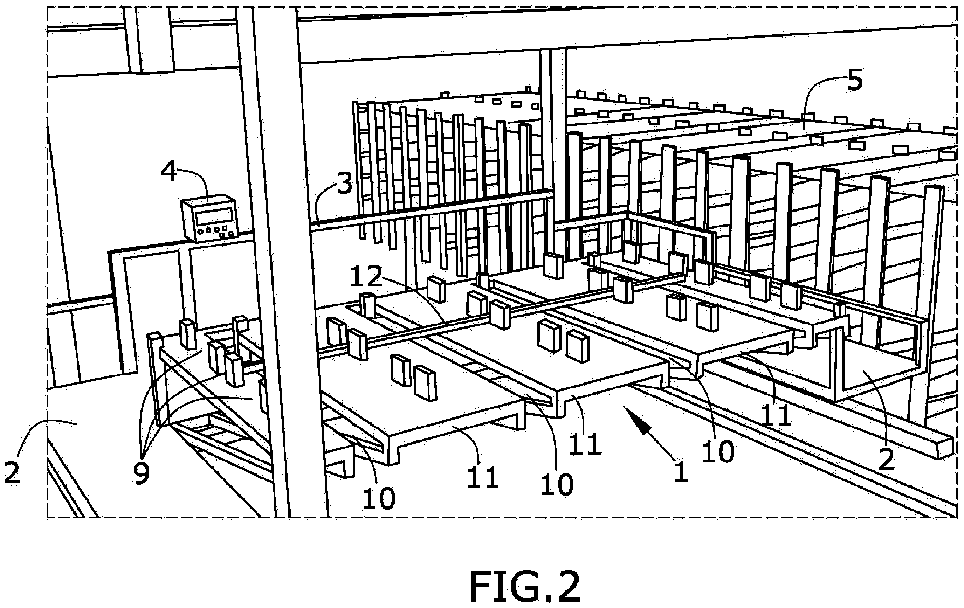

In figure 2 it is possible to observe how the lift platform (1) comprises:
- A supporting surface for the elongated elements of the order which has a series of fixed or moveable cradles (11) between which a series of spaces (10) are left between the cradles (11) defining over the entire supporting surface a series of independent spaces or stacking boxes (9).
- The lateral gangways (2) and one rear one (3).
- A control panel (4) which is located on the platform, and has two distinct sections:
   ▪Travel push button panel
   ▪ A push button panel for the gantry or gantry crane and in particular for the gantry hoists.

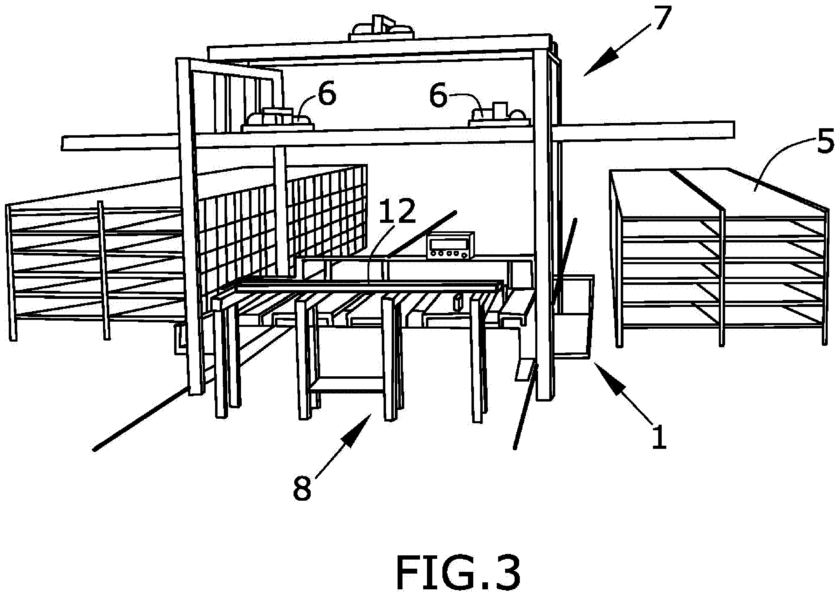

In figure 3 it is possible to see how a set of elongated elements (12), such as the one represented in figure 2, is proceeded to be deposited on the unloading table (8) which have a series of arms in a horizontal disposition and disposed in such a way that they can be housed in the spaces (10) between the cradles (11), in such a way that when said arms are housed in the spaces (10) one proceeds to lower the lift platform (1) whereby the elongated elements (12) are left deposited on the arms of the unloading table (8).

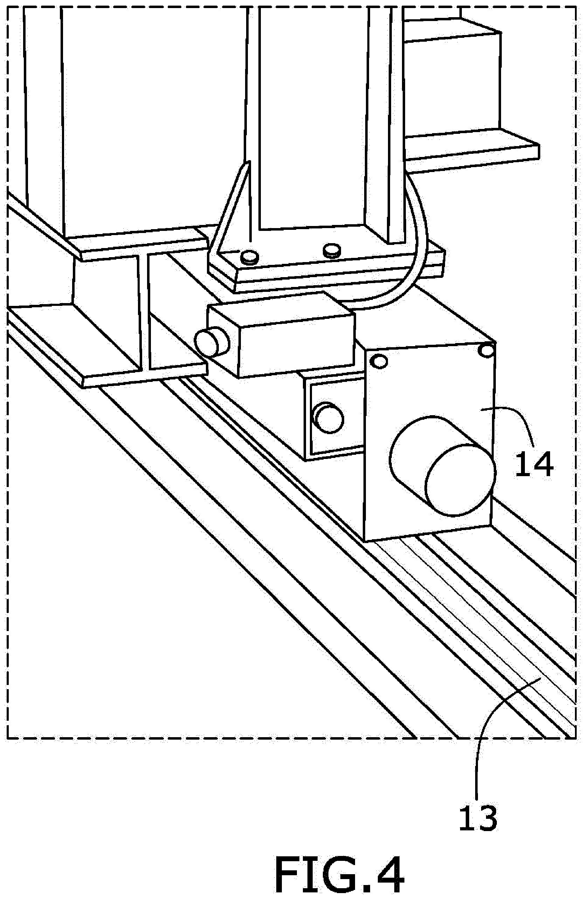

Finally, figure 4 shows a detail of a guide track (13) along which the ends of the pillars of the moveable gantry (7) run, and how on at least one of the pillars a safety brake (14) is disposed.

## Claims

1. Automated order preparation system for elongated elements which comprises:
- a movable gantry (7) on guide tracks (13) mounted on the floor,
- a lift platform (1) secured on the moveable gantry and which can be lifted and lowered,
- an unloading table (8) or fixed structure onto which the material is evacuated from the lift platform,
wherein
the lift platform comprises:
- a supporting surface for the elongated elements of the order, which comprises a series of fixed or movable cradles (11) between which a series of spaces (10) are left between them, defining over the entire supporting surface a series of independent spaces or stacking boxes (9),
- a transportation aisle
**characterised in that**
the transportation aisle for workers on the lift platform, is formed by three gangways:
• a rear gangway (3) connecting two lateral gangways (2) which is from where the material is prepared, these three gangways are limited on one side by the stacking boxes (9) and on the other side by railings with their corresponding access doors, and **in that**
- it has a control panel (4) mounted on the platform
and where the gantry is provided with at least two hoists (6) which can be moved right, left and proceed to lift or lower the material to be prepared, it being possible to handle the hoists (6) independently or in a synchronised manner.

2. Automated order preparation system for elongated elements, according to claim 1, **characterised in that** the control panel (4) comprises two distinct sections:
- a travel push button panel formed by a series of push buttons for carrying out the movements forward, back, up and down of the platform and also the safety stop of the platform, it also has a computer with a touchscreen to manage the orders received,
- a push button panel for the gantry or gantry crane and in particular for the gantry hoists, this push button panel has the functions to lift and lower, left, right, forward, back and the option to synchronise both hoists or to handle one or the other independently.

3. Automated order preparation system for elongated elements, according to claim 1, **characterised in that** the unloading table (8) has a series of arms in a horizontal disposition and disposed in such a way that they can be housed in the spaces (10) between the cradles (11).

4. Automated order preparation system for elongated elements, according to any of the preceding, **characterised in that** the gantry (7) is disposed in the space comprised between two storage slots (5) disposed opposite each other.

5. Automated order preparation system for elongated elements, according to claim 4, **characterised in that** for lower storage slots, the lift platform (1) has been provided with lateral doors with springs, one on each side.

6. Automated order preparation system for elongated elements, according to any of the preceding claims, **characterised in that** the system is provided with safety means some or all of those listed below:
- Anti-slip floor on the gangways or pedestrian zone of the platform,
- Instantaneous fall protection system installed on the platform placed on each one of the four cables that the platform holds,
- Safety mushroom,
- Door opening safety means in such a way that access doors to the machine will not open while the equipment is in motion or when it is raised,
- Automatic door closing,
- Operator presence control pedal,
- Volumetric sensors which detect possible people in the working zone of the platform and brake the platform,
- The machine has an acoustic signal.

7. Automated order preparation system for elongated elements, according to claim 6, **characterised in that** four volumetric sensors are placed on the front part, and four more on the rear part.

8. Method for preparing orders for elongated elements using the system claimed in any of the claims 1-7, **characterized in that** it comprises the following steps:
- the lift platform (1) starts its movement from the order dispatch zone,
- from this point with the platform (1) in the lower position, the backwards movement of the platform begins until positioning itself in the location indicated in the screen as being where the material to be prepared is, said order is assigned by a programme a box (9) into which the material has to be stacked,
- positioning the lift platform (1) in the corresponding location to extract the material to a specific box or slot (9),
- once the lift platform (1) is positioned in place, the material is extracted, this extraction is made depending on the weight of the material either manually or with the help of the hoists (6),
- the orders to be made are ordered automatically so as to reduce the movements of the lift platform (1), combining several orders at the same time, the order of preparation always begins with hot-rolled products, finishing with the pipe, so that the heaviest material does not scratch the lightest,
- once all the orders have been prepared in the lift platform (1), said platform moves to the unloading table (8).

## Patentansprüche

1. Automatisiertes System zur Vorbereitung von Bestellungen länglicher Elemente, das Folgendes umfasst:
- eine bewegliche Gerüstbrücke (7) auf am Boden befestigten Führungsschienen (13),
- eine an der beweglichen Gerüstbrücke gesicherte Hubplattform (1), die gehoben oder gesenkt werden kann,
- einen Entladetisch (8) oder eine feste Struktur, auf welcher das Material von der Hubplattform abgesetzt wird,
worin
die Hubplattform umfasst:
- eine Auflagefläche für die länglichen Elemente der Bestellung, die eine Reihe von festen oder beweglichen Schlitten (11) umfasst, zwischen denen eine Reihe von Zwischenräumen (10) belassen sind, die über die gesamte Auflagefläche eine Reihe von unabhängigen Zwischenräumen oder Stapelkästen (9) definieren,
- einen Transportgang,
**dadurch gekennzeichnet, dass**
der Transportgang
für die Arbeiter auf der Hubplattform aus drei Laufstegen besteht:
• einem hinteren Laufsteg (3),
der mit zwei
seitlichen Laufstegen (2) verbunden ist, von wo aus das Material vorbereitet wird,
wobei diese drei Laufstege auf der einen Seite durch die Stapelkästen (9) und die auf der anderen
Seite durch Geländer mit den entsprechenden Zugangstüren begrenzt sind,
und dass
- es ein auf der Plattform montiertes Bedienpult (4) aufweist,
und wobei die Gerüstbrücke mit mindestens zwei Aufzügen (6) versehen ist, die nach rechts und links bewegt werden und das vorzubereitende Material heben oder senken können, wobei es möglich ist, die Aufzüge (6) unabhängig oder auf synchronisierte Weise zu bedienen.

2. Automatisiertes System zur Vorbereitung von Bestellungen länglicher Elemente nach Anspruch 1, **dadurch gekennzeichnet, dass** das Bedienpult (4) zwei unterschiedliche Bereiche umfasst:
- ein Ausfahr-Drucktastenpult,
bestehend aus einer Reihe von Drucktasten zur Durchführung der Vorwärts-, Rückwärts-, Aufwärts- und Abwärtsbewegungen der Plattform sowie des Sicherheitsstops der Plattform, das
ebenfalls einen Computer mit einem Tastbildschirm zur Bewerkstelligung der erhaltenen Bestellungen aufweist,
- ein Drucktastenpult für die Gerüstbrücke oder die Brückenkrananlage, insbesondere für die Aufzüge der Gerüstbrücke, wobei dieses Drucktastenpult die Funktionen Heben, Senken, Rechts-, Links-, Vorwärts- und Rückwärtsbewegung sowie die Option zur Synchronisierung der beiden Aufzüge oder zum unabhängigen Bedienen des einen oder anderen Aufzugs aufweist.

3. Automatisiertes System zur Vorbereitung von Bestellungen länglicher Elemente nach Anspruch 1, **dadurch gekennzeichnet, dass** der Entladetisch (8) eine Reihe von horizontal angeordneten Armen aufweist, die derart angeordnet sind, dass sie von den Zwischenräumen (10) zwischen den Schlitten (11) aufgenommen werden können.

4. Automatisiertes System zur Vorbereitung von Bestellungen länglicher Elemente nach einem der vorhergehenden Ansprüchen, **dadurch gekennzeichnet, dass** die Gerüstbrücke (7) im Zwischenraum zwischen zwei einander gegenüberliegenden Lagerfächern (5) angeordnet ist.

5. Automatisiertes System zur Vorbereitung von Bestellungen länglicher Elemente nach Anspruch 4, **dadurch gekennzeichnet, dass** die Hubplattform (1) für niedrigere Lagerfächer mit Seitentüren versehen ist,
die an jeder Seite eine Feder aufweisen.

6. Automatisiertes System zur Vorbereitung von Bestellungen länglicher Elemente nach einem der vorhergehenden Ansprüche,
**dadurch gekennzeichnet, dass** das System mit
Sicherheitsmitteln ausgestattet ist, von denen einige oder alle nachfolgend aufgelistet sind:
- Rutschsicherer Bodenbelag auf den Laufstegen oder der Fußgängerzone der Plattform,
- unmittelbar auf der Plattform installiertes Fallschutzsystem an jedem der vier Kabel, die die Plattform haltet,
- Sicherheitskappe,
- Türöffnungssicherungen, damit sich die Zugangstüren zur Maschine während der Bewegung oder des Anhebens des Geräts nicht öffnen,
- automatisches Türschließsystem,
- Sicherheitspedal,
- volumetrischer Sensor, der die mögliche Anwesenheit von Personen in der Arbeitszone der Plattform detektiert und die Plattform bremst,
- ein von der Maschine ausgehendes akustisches Signal.

7. Automatisiertes System zur Vorbereitung von Bestellungen länglicher Elemente nach Anspruch 6, **dadurch gekennzeichnet, dass** vier volumetrische Sensoren am vorderen Teil und vier weitere am hinteren Teil angebracht sind.

8. Verfahren zur Vorbereitung von Bestellungen länglicher Elemente unter Verwendung des Systems nach einem der Ansprüche 1 bis 7, **dadurch gekennzeichnet, dass** es folgende Schritte umfasst:
- die Hubplattform (1) beginnt ihre Bewegung an der Warenversand-Zone,
- von diesem Punkt aus, in dem sich die Plattform (1) in der niedrigeren Position befindet, beginnt die Rückwärtsbewegung der Plattform, bis sie die auf
dem Bildschirm angezeigte Stelle erreicht hat, an der sich das vorzubereitende Material befindet, wobei die besagte Bestellung über ein Programm einem Kasten (9), in dem das Material gestapelt werden soll, zugewiesen wird,
- Positionierung der Hubplattform (1) an entsprechender Stelle, um das Material aus einem bestimmten Kasten oder Fach (9) zu entnehmen,
- sobald die Hubplattform (1) diese Stelle erreicht hat, wird das Material entnommen, wobei diese Entnahme in Abhängigkeit vom Gewicht des Materials entweder manuell oder mit Hilfe der Aufzüge (6) durchgeführt wird,
- die auszuführenden Bestellungen werden automatisch erstellt, um die Bewegungen der Hubplattform (1) zu reduzieren, indem mehrere gleichzeitige Bestellungen kombiniert werden, wobei die Vorbereitung der Bestellungen stets bei den warmgewalzten Produkten beginnt und bei den Rohren endet, damit das schwerste Material nicht das leichteste zerkratzt,
- sobald alle Bestellungen auf der Hubplattform (1) vorbereitet worden sind, bewegt sich die besagte Plattform zum Entladetisch (8).

## Revendications

1. Système automatisé de préparation de commandes d'éléments allongés qui comprend :
- un portique mobile (7) sur des rails de guidage (13) fixés au sol,
- une plateforme de levage (1) fixée sur le portique mobile qui peut être levée et abaissée,
- un plateau de déchargement (8) ou structure fixe, sur lequel est déposé le matériel de la plateforme de levage,
dans lequel
la plateforme de levage comprend :
- une surface d'appui pour les éléments allongés de la commande, qui comprend une série de supports mobiles ou fixes (11) contenant un certain nombre d'espaces (10) laissés entre eux, afin de définir une série d'espaces indépendants ou de boîtes empilables (9) sur toute la surface d'appui,
- un couloir de transport
**caractérisé en ce que**
le couloir de transport
destiné aux travailleurs sur la plateforme de levage, est constitué de trois passerelles :
• une passerelle arrière (3)
qui relie deux
passerelles latérales (2) à partir desquelles le matériel est préparé, ces trois passerelles étant limitées d'un côté par les
boîtes empilables (9) et de l'autre
côté par des rampes avec leurs portes d'accès correspondantes,
et **en ce que**
- elle possède un panneau de contrôle (4) installé sur la plateforme
et où le portique est pourvu d'au moins deux palans (6) qui peuvent être déplacés vers la droite et la gauche, et qui servent à lever ou à abaisser le matériel à préparer, où les palans (6) peuvent être manipulés individuellement ou d'une manière synchronisée.

2. Système automatisé de commande d'éléments allongés, selon la revendication 1, **caractérisé en ce que** le panneau de contrôle (4) comprend deux sections distinctes :
- un panneau
de commandes de déplacement formé par une série de boutons-poussoirs pour effectuer
les mouvements avant, arrière, ascendant et descendant de la plateforme, ainsi que
l'arrêt de sécurité de la plateforme, il
possède en outre un ordinateur équipé d'un écran tactile pour la gestion des commandes reçues,
- un panneau de commandes pour le portique ou le pont-portique et en particulier pour les palans de portique, ledit panneau de commandes ayant pour fonction de lever et abaisser, vers la gauche, la droite, l'avant, l'arrière, et optionnellement de synchroniser les deux palans ou de les manipuler de façon indépendante.

3. Système automatisé de préparation de commandes d'éléments allongés, selon la revendication 1, **caractérisé en ce que** le plateau de déchargement (8) possède une série de bras disposés horizontalement et de manière à être logés dans les espaces (10) présents entre les supports (11).

4. Système automatisé de préparation de commandes d'éléments allongés, selon l'une quelconque des revendications précédentes, **caractérisé en ce que** le portique (7) est placé dans l'espace compris entre deux logements de stockage (5) situés l'un en face de l'autre.

5. Système automatisé de préparation de commandes d'éléments allongés, selon la revendication 4, **caractérisé en ce que**, pour les logements de stockage inférieurs, la plateforme de levage (1) est
équipée de portes latérales comprenant des ressorts, un de chaque côté.

6. Système automatisé de préparation de commandes d'éléments allongés, selon l'une quelconque des revendications précédentes,
**caractérisé en ce que** le système est pourvu de
moyens de sécurité, dont certains d'entre eux ou tous sont mentionnés ci-après:
- Un sol antidérapant sur les passerelles ou zone piétonnière de la plateforme,
- un système de protection instantané contre les chutes installé sur la plateforme et placé sur chacun des quatre câbles inclus dans la plateforme,
- un bouton-poussoir champignon de sécurité,
- des moyens de sécurité d'ouverture de porte, de telle sorte que les portes d'accès à la machine ne s'ouvrent pas lorsque l'équipement est en mouvement ou qu'il est levé,
- la fermeture automatique de porte,
- une pédale de contrôle de présence de l'opérateur,
- des capteurs volumétriques qui servent à détecter les personnes susceptibles d'être présentes dans la zone de travail de la plateforme et qui vont freiner la plateforme,
- l'émission d'un signal sonore par la machine.

7. Système automatisé de préparation de commandes d'éléments allongés, selon la revendication 6, **caractérisé en ce que** quatre capteurs volumétriques sont placés sur la partie avant, et quatre autres sur la partie arrière.

8. Méthode de préparation de commandes d'éléments allongés utilisant le système revendiqué dans l'une quelconque des revendications 1 à 7, **caractérisée en ce qu'**elle comprend les étapes suivantes :
- la plateforme de levage (1) commence à se déplacer depuis la zone d'expédition des commandes,
- à partir de ce point, avec la plateforme (1) en position abaissée, le mouvement vers l'arrière de la plateforme commence jusqu'à ce que celle-ci se place dans l'emplacement indiqué sur
l'écran où se trouve le matériel à préparer, ladite commande ayant une boîte (9) assignée par un programme où le matériel doit être entreposé,
- positionnement de la plateforme de levage (1) dans l'emplacement correspondant afin de récupérer le matériel dans une boîte ou logement spécifique (9),
- une fois la plateforme de levage (1) placée en position, on retire le matériel, en fonction du poids du matériel, le retrait est effectué, soit manuellement, soit à l'aide des palans (6),
- les commandes à réaliser sont passées automatiquement afin de réduire les mouvements de la plateforme de levage (1), en associant plusieurs commandes en même temps, la commande de préparation commence toujours par les produits laminés à chaud, et s'achève avec les tuyaux, de telle sorte que le matériel le plus lourd n'endommage pas le plus léger,
- une fois toutes les commandes prêtes sur la plateforme de levage (1), ladite plateforme se déplace vers le plateau de déchargement (8).
